## Europäisches Patentamt

## European Patent Office

## Office européen des brevets

(19)

(11) Numéro de publication: **0 213 015**
**B1**

(12) **FASCICULE DE BREVET EUROPEEN**

(45) Date de publication du fascicule du brevet:
27.09.89

(21) Numéro de dépôt: **86401619.1**

(22) Date de dépôt: **21.07.86**

(51) Int. Cl.⁴: **A 22 C 17/08**, A 22 B 7/00

(54) **Procédé de désossage de viande et moyens en vue de la mise en oeuvre de ce procédé.**

(30) Priorité: **09.08.85 FR 8512468**

(43) Date de publication de la demande:
**04.03.87 Bulletin 87/10**

(45) Mention de la délivrance du brevet:
**27.09.89 Bulletin 89/39**

(84) Etats contractants désignés:
**BE DE GB NL**

(56) Documents cités:
**EP-A- 0 121 477**
**DE-B- 1 136 237**
**FR-A- 1 330 600**
**US-A- 2 640 225**
**US-A- 3 531 825**

(73) Titulaire: **JEAN CABY & CIE SARL, 40 rue de la Gare,
F-59872 Saint André Cédex (FR)**

(72) Inventeur: **Jengembre, Henri, 10 avenue Foch,
F-59700 Marcq en Baroeul (FR)**
Inventeur: **Truffaut, Jean Paul, 18 rue Pierre Catteau,
Hameau du Gros Saule F-59115 Leers (FR)**
Inventeur: **Macquet, André, 33 rue du Président
Pompidou, F-59237 Verlinghem (FR)**
Inventeur: **Dubus, Jean Pierre, 98 rue de Bouvines,
F-59790 Ronchin (FR)**
Inventeur: **Surmont, Paul, 44 Sentier du Quesne,
F-59700 Marcq en Baroeul (FR)**
Inventeur: **Vanoverfeldt, Henri, 1 rue de l'Yser,
F-59350 Saint André (FR)**
Inventeur: **Daquet, Jean Louis, 19 rue Augustin Tirmont,
F-59283 Raimbeaucourt (FR)**

(74) Mandataire: **Ecrepont, Robert, Cabinet
Ecrepont 12 Place Simon Vollant, F-59800 Lille (FR)**

## Description

L'invention se raporte à un procédé de désossage de viande ainsi qu'aux moyens en vue de la mise en œuvre de ce procédé. Elle s'applique plus particulièrement mais non exclusivement au désossage de quadrupèdes et notamment de truies.

A ce jour, après que la truie a été abattue, elle est stockée en chambre froide en attendant de pouvoir être désossée puis, pour être désossée, alle est tout d'abord découpée en quartiers dont, ensuite, on enlève le gras avec la couenne avant qu'enfin soit opéré le désossage proprement dit par enlèvement successif des os.

Lors de cette opération de désossage, le préposé qui effectue la séparation des morceaux de viande ne le fait pas toujours comme le souhaiterait le consommateur ou l'intermédiaire entre le consommateur et le dit préposé, tel le boucher, le traiteur ou le charcutier.

En outre, séparées des autres morceaux, certaines pièces de viande ne sont pas toujours identifiables avec précision. Par exemple, les charcutiers fabriquant des saucissons secs qui préfèrent utiliser de la viande de truies du fait que leur croissance est généralement moins forcée que celle des jeunes porcs, peuvent avoir des difficultés à contrôler que tous les morceaux qu'ils achètent sont bien des morceaux de viande de truies et non de jeunes porcs.

Ces opérations de découpage en quartiers, découennage puis de désossage sont très longues à réaliser.

Le passage en chambre froide concourt aussi à rendre le désossage plus difficile et donc plus long à réaliser.

C'est ainsi que les plus adroits des préposés à ces opérations ne parviennent pas à travailler plus de sept truies par jour. Du fait du découpage préalable en quartiers, la couenne est également fragmentée et sa valorisation est difficile.

Pour les bovins, il est connu d'obvier ces derniers inconvénients en pratiquant un désossage dit à chaud.

Selon un procédé en usage pour les bovins, après que la bête a été abattue, dépouillée et fendue en deux demi-carcasses, chacune d'elles n'est scindée qu'en deux quartiers qui sont ensuite chacun à leur tour suspendus à un convoyeur tandis que des pinces saisissent et tirent la chair que, progressivement, un préposé détache des os sans séparer les différents morceaux de viande du quartier.

C'est donc classiquement la partie du squelette correspondant au quartier qu reste fixée au support et qui doit donc être détachée pour laisser la place à un autre quartier tandis qu'en une seule pièce, la viande de ce quartier est disposée sur un transporteur.

Les pinces doivent suivre un parcours déterminé de manière, d'une part, à exercer sur la chair une traction continue au fur et a mésure qu'elle est détachée du squelette dont elle tend à s'écarter en s'affaissant vers le bas, puis, d'autre part, à transférer cette pièce de viande sur son transporteur.

Aussi, ces pinces doivent elles pour cela être portées par des supports et l'inconvénient majeur est que ce matériel est souvent complexe et onéreux.

Selon un autre procédé en usage pour les bovins, (EP-A-0 121 477) aussitôt après que la bête a été abattue et que sa peu a été entièrement ôtée, elle n'est, avant désossage, au plus fendue qu'en deux demi-carcasses.

Le désossage, que sans interruption elle subit alors, s'opère toutefois comme pour le porc par enlèvement successif des différents morceaux de viande de chaque demi-carcasse qui, pour faciliter ce travail, au lieu d'être simplement suspendue par la crosse arrière, est en plus maintenue par un support qui verrouille le squelette en exerçant un effort de traction entre plusieurs points de la colonne vertébrale et la dite crosse arrière qui, au terme du désossage, reste accrochée au support avec le reste du squelette au terme du désossage.

Si ce procédé évite le morcellement avant désossage et permet un travail à chaud, on retrouve par contre les inconvénients qui, lors du désossage sont liés à la séparation des morceaux de viande que l'acquéreur aura des difficultés à identifier et qu'il faudra reprendre séparément pour les conduire au réfrigérateur et/ou en salle de travail ou de conditionnement tandis que le squelette doit être décroché pour libérer le support pour une autre demi-carcasse et doit être désarticulé pour pouvoir alimenter la machine de pressage et de concassage. Un résultat que l'invention vise à obtenir est un procédé de désossage à chaud de viande qui, tout en permettant à l'acheteur une identification aisée des morceaux et de contrôler la présence de tous les morceaux, ne nécessite pas de matériels complexes.

Un autre résultat est un tel procédé qui facilite la tâche des préposés au désossage et conduise ainsi à une production très élevée.

A cet effet, l'invention a pour objet un procédé de désossage différent du type précité notamment caractérisé en ce qu'on suspend la carcasse dont on a prélevé la peau au préalable, avec son axe longitudinal dirigé verticalement et on maintient les chairs en extension au moins transversale, puis on retire successivement tous les os, pour laisser suspendu un «manteau» de viande dont l'anatomie des muscles est intacte. Elle a également pour objet les moyens en vue de la mise en œuvre du procédé.

Elle sera bien comprise à l'aide de la description ci-après faite, à titre d'exemple non limitatif, en regard du dessin ci-annexé qui représente schématiquement:

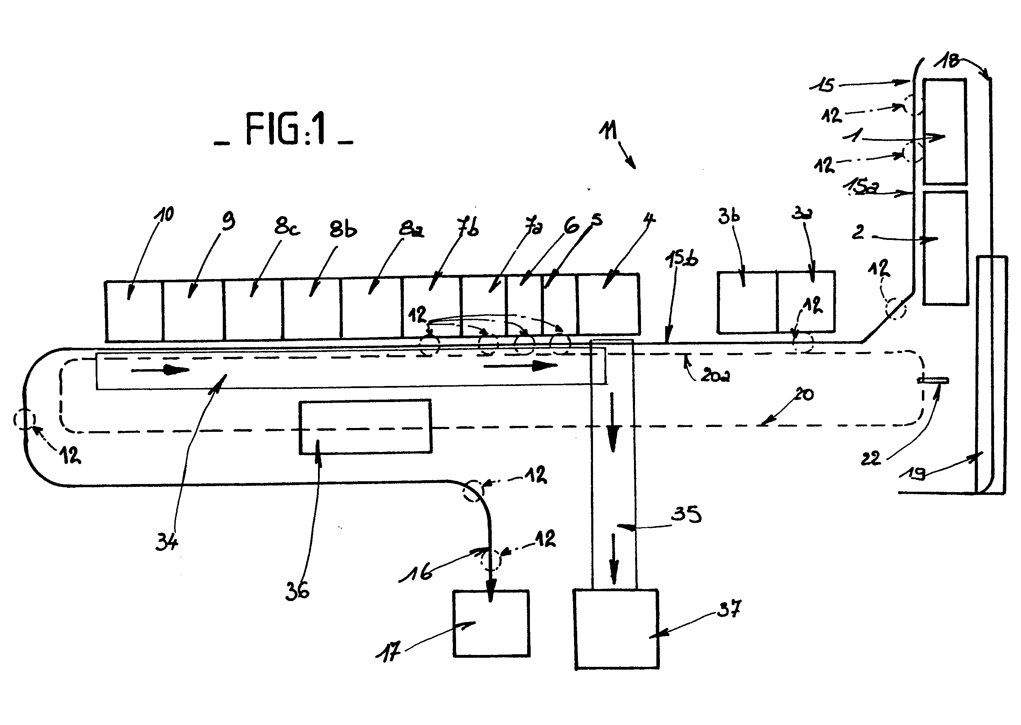

figure 1: l'implantation tant des postes où sont opérées les différentes phases du désossage que de matériels annexes,

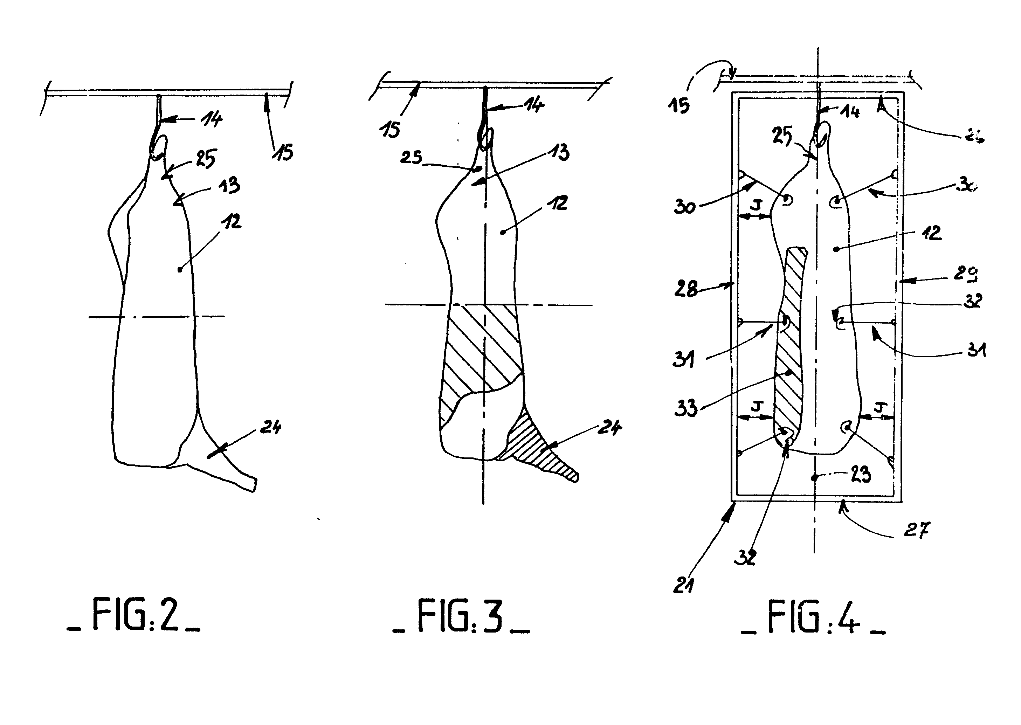

figure 2 à 4: chacune des principales phases du désossage.

Selon la caractéristique du procédé de l'invention, au lieu de détacher la viande de son squelette et d'en ôter successivement les différents morceaux de chair, on suspend la carcasse de truie dépouillée et on en maintient les chairs en extension au moins transversale puis on retire successivement tous les os, pour laisser un «manteau» de viande suspendu (anatomie des muscles intacte).

Bien qu'au dessin, ne soit représentée que la partie désossage 11 de l'installation, en amont de celle-ci se situent évidemment, la salle d'abattage, le poste d'arrachage des peaux et le poste de sciage en deux demi-carcasses, postes indispensables pour cette nouvelle technique.

En se reportant au dessin, on voit que chaque demi-carcasse 12 pénètre dans cette partie désossage 11 en étant par le tendon 25 de son jarret arrière 13 suspendue à un crochet 14 circulant et par exemple roulant sur un tronçon d'entrée 15a d'un convoyeur 15, tel un rail, qui se raccorde à un tronçon passant devant les postes 1 à 10 de l'installation où la demi-carcasse 12 subit son désossage.

En sortie de la partie désossage 11 de l'installation, le convoyeur 15 se raccorde à un autre convoyeur 16 ou se poursuit pour créer ce convoyeur 16 desservant une partie 17 de l'installation qui est située en aval du désossage, telle une chambre froide.

Notamment, pour les demi-carcasses de truies, les deux premiers postes 1, 2 sont destinés au dégraissage; dans tous les cas, l'un d'eux, tel le second (2), étant en plus destiné à l'enlèvement de l'épaule 24.

A cet effet, outre le tronçon 15 du convoyeur 15 des crochets 14 portant les demi-carcasses 12, ils sont équipés:

— d'un convoyeur 18 de crochets (non représentés) destinés à recevoir les morceaux de gras qui ont été détachés et,

— d'un tapis 19 transportant l'épaule 24 vers un autre poste (non représenté), par exemple vers une table de désossage traditionnel.

De préférence, pour les deux premiers postes sont prévues des plateformes situées à des hauteurs différentes par exemple de 1,60 mètres et de 0,80 mètre de manière à ce que les préposés qui se tiennent sur ces plateformes soient situés à bonne hauteur pour dégraisser l'un la moitié supérieure, l'autre la moitié inférieure de la demi-carcasse.

Les demi-carcasses 12 dégraissées et privées de leur épaule 24 se présentent alors aux autres postes 3 à 10 qui, pour faciliter leur desserte par le tronçon correspondant 15b du convoyeur 15 des crochets 14 qui portent des demi-carcasses, sont de préférence sensiblement alignés.

Selon une caractéristique de l'invention, au moins parallèlement à ce tronçon 15b du convpyeur 15 des crochets 14, on fait circuler un tronçon 20a d'un convoyeur 20 de supports 21 de chair, lesquels supports sont aptes à maintenir la dite chair en extension notamment transversale.

Des moyens 22 assurent que ces supports 21 circulent en synchronisme avec les crochets 14 de manière à ce que chaque crochet reste sensiblement dans l'axe 23 de symétrie d'un support 21.

Ces moyens 22 consistent par exemple en des doigts 22 portés chacun par l'un des supports ou leurs convoyeur 20 et qui, lorsqu'ils parviennent près du tronçon 20a de leur parcours, poussent chacun l'un des crochets 14.

Ces supports 21 ont une forme et des dimensions telles qu'ils encadrent avec un grand jeu «J» la demi-carcasse 12.

Par exemple ils auront une forme rectangulaire délimitée par deux traverses 26, 27 et deux montants 28, 29 avec sinon une hauteur au moins une largeur nettement supérieure à celle de la demi-carcasse 12.

Chaque support 21 porte à des hauteurs différentes des éléments élastiques 30, 31 tels des ressorts terminés chacun par l'un des harpons 32 qui, après tension des éléments élastiques 30, 31, peuvent être ancrés dans la chair de la demi-carcasse 12 afin de maintenir celle-ci et de toujours la solliciter en extension au moins transversale au cours du désossage.

C'est ce travail qu'on réalise au poste 3a où le cadre se présente en premier.

Pour le préposé, est prévue une plateforme élévatrice facilitant le placement des harpons 32 à des hauteurs différentes.

Au poste suivant 3b, le préposé dégage la colonne vertébrale en sciant le talon 33 des côtes du haut en bas en bénéficiant pour cela du mouvement de descente de la plateforme qui peut être commune à ces deux postes 3a, 3b.

Aux postes suivants 4, 5, un préposé sépare au couteau et retire à partir de la queue l'épine dorsale qu'il dirige sur un transporteur d'os 34, 35 puis aux postes 6 et 7, on dégage au couteau la poitrine en «scalpant» les os.

Ensuite, aux postes 8a, 8b, 8c, on retire notamment les os du jambon et les os des côtes lombaires.

Aux derniers postes 9, 10, on dénerve successivement la moitié supérieure et la moitié inférieure de la chair dont maintenant tous les os ont été ôtés.

De ce fait, parallèlement au dénervage, les préposés peuvent opérer les décrochages des harpons 32 de la moitié qu'ils viennent de dénerver afin de séparer par la suite la chair du support 21 correspondant.

Après dénervage, la chair de la demi-carcasse 12 est en une seule pièce et décrochée du support n'est donc plus suspendue qu'à son crochet 14 que le convoyeur 15 conduit alors dans la partie aval 17 de l'installation.

Quant à lui, le convoyeur 20 des supports 21 renvoie celui-ci vers la position de départ en passant par un tunnel de lavage 36.

Les os conduits par les transporteurs 34, 35 sont également amenés à une partie aval 37 de l'installation telle un poste de concassage et de pressage direct.

Les moyens en vue de la mise en œuvre du procédé comprennent évidemment principalement les supports avec leurs moyens de maintien de la chair en extension et leur convoyeur ainsi que les moyens qui les font circuler parallèlement et en synchronisme avec les crochets 14 lorsqu'ils circulent devant les postes de désossage.

L'invention est êtroitement liée aux opérations d'abattage, notamment sur la dépouille des truies suivant le même processus que les bovins.

La peau de truie représente un élément important dans la valorisation du cinquième quartier.

## Revendications

1. Procédé de désossage de viande d'une carcasse et plus particulièrement mais non exclusivement de demi-carcasse de quadrupèdes notamment de truies, lequel procédé est caractérisé en ce qu'on suspend la carcasse dépouillée avec son axe longitudinal dirigé verticalement et on en maintient les chairs en extension au moins transversale puis on retire successivement tous les os, pour laisser suspendu un «manteau» de viande dont l'anatomie des muscles est intacte.

2. Procédé selon la revendication 1, caractérisé en ce qu'on suspend la viande à un crochet (14) d'un convoyeur (15) dont un tronçon (15b) dessert des postes de désossage et en ce qu'au moins parallèlement à ce tronçon (15b) du convoyeur (15) des crochets (14), on fait circuler un tronçon (20a) d'un convoyeur (20) de supports (21) de chair aptes à maintenir la dite chair en extension notamment transversale.

3. Procédé selon la revendication 2, caractérisé en ce qu'avant de commencer le désossage, on place la chair en extension sur le support (21) de chair dont au terme du désossage, on la décroche.

4. Procédé selon la revendication 2 ou 3, caractérisé en ce qu'au fur et à mesure du désossage, au moyen d'un convoyeur on évacue les os retirés séparemment.

5. Procédé selon la revendication 2 ou 3, caractérisé en ce qu'on procède principalement comme suit:
— on dégage la colonne vertébrale en sciant le talon (33) des côtes du haut en bas, puis
— on sépare au couteau et retire à partire de la queue l'épine dorsale (3) puis
— on dégage au couteau la poitrine en «scalpant» les os, puis,
— on retire notamment les os du jambon et les os des côtes lombaires, et enfin
— on dénerve et on décroche la chair du support de chair (21).

6. Moyens en vue de la mise en œuvre du procédé selon l'une quelconque des revendications 1 à 5, caractérisés en ce qu'ils comprennent principalement au moins un support (21) pourvu de moyens (30 à 32) assurant au cours du désossage le maintien de la chair en extension au moins transversale à l'axe longitudinal de la carcasse dirigé verticalement.

7. Moyen selon la revendication 6, caractérisés en ce que le support (21) a une forme et des dimensions telles qu'il encadre avec un grand jeu (J) la demi-carcasse (12).

8. Moyens selon la revendication 7, caractérisé en ce qu'ils comprennent un support (21) qui porte à des hauteurs différentes des éléments élastiques (30, 31) terminés chacun par l'un des harpons (32) qui, après tension des éléments élastiques (30, 31), peuvent être ancrés dans la chair.

9. Moyens selon la revendication 7, caractérisé en ce que pour porter les supports (21) ils comprennent un convoyeur (20) dont un tronçon (20a) du parcours est sensiblement parallèle au tronçon (15b) du parcours du convoyeur (15) de crochets situés devant les postes de désossage.

10. Moyens selon la revendications 9, caractérisés en ce qu'ils comprennent des moyens (22) synchronisant la marche des convoyeurs (15, 20) l'un (15) de crochets (14) et l'autre (20) de support de chair (21).

**Patentansprüche**

1. Verfahren zum Ausbeinen von Fleisch eines Tierkörpers und speziell, aber nicht ausschließlich, von Körperhälften von Vierbeinern, insbesondere von Schweinen, dadurch gekennzeichnet, daß der abgehäutete Tierkörper mit seiner vertikal ausgerichteten Längsachse aufgehängt und das Fleisch zumindest in Längsrichtung unter Dehnung gehalten wird, worauf fortschreitend alle Knochen entfernt werden, um einen «Mantel» von Fleisch mit intakter Anatomie der Muskeln aufgehängt zu lassen.

2. Verfahren nach Anspruch 1, dadurch gekennzeichnet, daß das Fleisch auf einem Haken (14) einer Transporteinrichtung (15), von der eine Strecke (15b) mit Bereichen zum Ausbeinen versehen ist und das zumindest parallel zu der Strecke (15b) der Transporteinrichtung (15) für die Haken (14) eine Strecke (20a) einer Transporteinrichtung (20) für Halteeinrichtungen (21) für das Fleisch umläuft, die geeignet sind, das Fleisch insbesondere in Längsrichtung gedehnt zu halten.

3. Verfahren nach Anspruch 2, dadurch gekennzeichnet, daß das Fleisch vor dem Beginn des Ausbeinens in der Halteeinrichtung (21) für Fleisch unter Ausdehnung angeordnet wird, und daß es am Ende des Ausbeinens heruntergenommen wird.

4. Verfahren nach Anspruch 2 oder 3, dadurch gekennzeichnet, daß mit Fortschreiten des Ausbeinens mittels einer Transporteinrichtung die entfernten Knochen getrennt abtransportiert werden.

5. Verfahren nach Anspruch 2 oder 3, dadurch gekennzeichnet, daß im wesentlichen wie folgt vorgegangen wird:
— die Wirbelsäule wird freigemacht, indem der hintere Teil (33) der Rippen von oben nach unten geschnitten wird, dann
— wird mit dem Messer getrennt und angefangen vom Schwanz das Rückgrat (3) herausgenommen, dann
— mit dem Messer die Brust freigemacht, indem die Knochen «skalpiert» werden, dann
— werden namentlich die Knochen des Schinkens und die Knochen der Lendenrippen entfernt und schließlich wird
— entrippt und das Fleisch von der Halteeinrichtung für das Fleisch (21) enthakt.

6. Mittel zum Durchführen eines Verfahrens nach einem der Ansprüche 1 bis 5, dadurch gekennzeichnet, daß sie hauptsächlich zumindest eine Halteeinrichtung (21) aufweisen, die mit Mitteln (30 bis 32) versehen ist, mit denen im Verlauf des Ausbeinens sichergestellt werden kann, daß das Fleisch zumindest quer zu der vertikal ausgerichteten Längsachse des Körpers unter Ausdehnung gehalten ist.

7. Mittel nach Anspruch 6, dadurch gekennzeichnet, daß die Halteeinrichtung (21) eine Gestalt und Abmessungen derart aufweist, daß die Körperhälfte (12) mit großem Spiel (J) umrahmt ist.

8. Mittel nach Anspruch 7, dadurch gekennzeichnet, daß sie eine Halteeinrichtung (21) aufweisen, die in verschiedenen Höhen elastische Elemente (30, 31) trägt, von denen jedes in einem harpunenförmigen Haken (32) endet, die, nachdem die elastischen Elemente (30, 31) gespannt sind, in dem Fleisch verankert sein können.

9. Mittel nach Anspruch 7, dadurch gekennzeichnet, daß sie zum Tragen der Halteeinrichtung (21) eine Transporteinrichtung (20) aufweisen, von der eine Teilstrecke (20a) der Gesamtstrecke im wesentlichen parallel ist zur Teilstrecke (15b) der Gesamtstrecke der Transporteinrichtung (15) für die Haken, die vor den Bereichen zum Ausbeinen angeordnet ist.

10. Mittel nach Anspruch 9, dadurch gekennzeichnet, daß sie Mittel (22) enthalten zum Synchronisieren der Bewegung der Transporteinrichtungen (15, 20) von denen eine (15) für die Haken (14) und die andere (20) für die Halteeinrichtung für das Fleisch (21) vorgesehen ist.

**Claims**

1. A method for boning meat from a carcass and more particularly, but not exclusively, from the half-carcass of quadrupeds, notably of sows, which method is characterised in that the skinned carcass is suspended with its longitudinal axis directed vertically, and the meat thereof is held stretched at least transversely, then all the bones are withdrawn successively so as to leave suspended a «coat» of meat wherein the anatomy of the muscles is intact.

2. A method according to claim 1, characterised in that the meast is suspended on a hook (14) of a conveyor (15), one section (15b) of which conveyor serves the boning stations, and in that at least parallel to this section (15b) of the conveyor (15) with the hooks (14), there is caused to move a section (20a) of a conveyor (20) with meat supports (21) which are adapted to hold the said meat stretched, notably transversely.

3. A method according to claim 2, characterised in that before the boning is commenced, the meat is placed stretched on the meat support (21), wherefrom it is unhooked at the end of the boning.

4. A method according to claim 2 or 3, characterised in that as the boning progresses, the withdrawn bones are evacuated separately by means of a conveyor.

5. A method according to claim 2 or 3, characterised in that, principally, one proceeds as follows:
— the backbone is disengaged by sawing the clod (33) from the ribs, from top to bottom, then
— with a knife, one separates and withdraws the spine (3), starting from the tail, then
— the breast is disengaged with a knife, by «scalping» the bones, then
— one withdraws, in particular, the bones of the thigh and the bones of the lumbar ribs, and finally
— the sinews are drawn out and the meat is unhooked from the meat support (21).

6. Means with a view to operating the method according to any one of the claims 1 to 5, characterised in that they comprise, principally, at least one support (21) provided with means (30 to 32) which, during the boning, ensure that the meat is held stretched at least transversely, with the longitudinal axis of the carcass directed vertically.

7. Means according to claim 6, characterised in that the support (21) is shaped and dimensioned such that it encloses the half-carcass (12) with a large amount of play (J).

8. Means according to claim 7, characterised in that they comprise a support (21) which carries, at different heights, elastic elements (30, 31) each of which terminates in one of the harpoons (32) which, after tensioning of the elastic elements (30, 31) may be fixed in the meat.

9. Means according to claim 7, characterised in that for carrying the supports (21), the means comprise a conveyor (20), a section (20a) of the path of which is substantially parallel to the section (15b) of the path of the conveyor (15) which has hooks situated in front of the boning stations.

10. Means according to claim 9, characterised in that they comprise means (22) synchronising the operation of the conveyors (15, 20), one of which (15) comprises the hooks (14), and the other (20) of which comprises the meat support (21).

_ FIG:1 _

_FIG.2_

_FIG.3_

_FIG.4_